Europäisches Patentamt

European Patent Office

Office européen des brevets

(11) Publication number: **0 100 637**
**B1**

(12) **EUROPEAN PATENT SPECIFICATION**

(45) Date of publication of patent specification: **10.02.88**

(51) Int. Cl.⁴: **D 03 D 15/00, B 29 D 29/08**

(21) Application number: **83304280.7**

(22) Date of filing: **25.07.83**

(54) Facing fabric and method of making and of incorporating said fabric into timing belts.

(30) Priority: **31.07.82 GB 8222165**

(43) Date of publication of application:
**15.02.84 Bulletin 84/07**

(45) Publication of the grant of the patent:
**10.02.88 Bulletin 88/06**

(84) Designated Contracting States:
**DE FR GB IT**

(56) References cited:
**AT-B- 356 885**
**DE-A-1 961 728**
**FR-A-2 387 308**
**US-A-3 441 641**
**US-A-3 856 907**
**US-A-3 934 968**

(73) Proprietor: **King, Raymond**
**103 St. John Street**
**Lees Oldham Lancashire (GB)**

(72) Inventor: **King, Raymond**
**103 St. John Street**
**Lees Oldham Lancashire (GB)**

(74) Representative: **Barker, Rosemary Anne et al**
**Barlow, Gillett & Percival 94 Market Street**
**Manchester M1 1PJ (GB)**

Courier Press, Leamington Spa, England.

## Description

This invention concerns facing fabric, more particularly, but not exclusively for use in timing belts and to a method of incorporating said fabric into timing belts, that is to say belts having on one side or on both sides raised portions or teeth and which are used, for example, in motor vehicles for timed operations, and to timing belts incorporating said fabric. By the term "facing fabric" it is meant a fabric which is particularly suitable for bonding to the surfaces of timing belts so as to overlie and strengthen its raised portions or teeth and so assist in preventing tooth shear.

Disclosed in AT 356885 is a method of producing toothed belts comprising transversely extending driving teeth (4) on both sides with a substantially non-extensible tranction member embedded therebetween. Securely overlying the teeth 4 is a covering or layer 3 of a textile fabric such as nylon.

Disclosed in FR 2387308 is a method of forming a loose woven fabric comprising spaced-apart warp threads 14 and spaced-apart, continuous multifilamentary untwisted weft threads 15. After its formation, the woven fabric is subjected to a treatment for opening and flattening the filaments which form the weft threads 15 so that after said treatment the woven fabric is virtually free from any gap between consecutive weft threads.

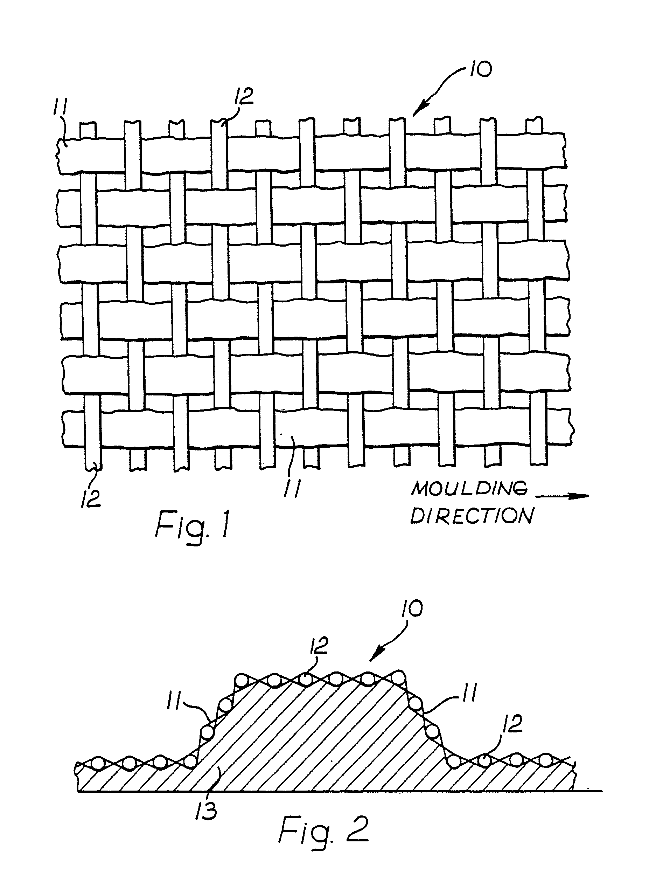

Disclosed in DE 1961728 is a fabric belt 1, the body 2 of which is reinforced internally by a reinforcement 3 comprising thread-like filaments 4 interwoven in warp and weft mesh like fashion with each other and with steel rods 5 (embodiment of Fig. 1) or with the interwoven warp 7 and weft 8 arranged around the steel rods 10 (embodiment of Fig. 2).

Disclosed in US 3441641 is a method of making toothed drive belts in which a protective fabric jacket 15 is moulded over the drive side of the belt 10 to bring about a major improvement in the shear strength and abrasion resistance of the driving teeth 12.

Disclosed in US 3856907 is a process and apparatus for manufacturing toothed belts, of elastomeric material, comprising a band of rubberized fabric 12 on which is applied transversally a plurality of listels 28 spaced apart at regular intervals.

Disclosed in US 3934968 is a mould for a toothed belt in which the belt is formed by applying a first layer of fabric 21 to one side of mandrel 1, overlaying the layer of fabric 21 with layers of elastomeric material and cords 22 to form a layer 23 of elastomeric material to form the bulk of the belt, and applying a second layer of fabric 24 over the layer 23. The moulded belt thus has both of its toothings covered with fabric.

Known facing fabrics and methods of incorporating the facing fabric into timing belts, such as described in the aforesaid prior patents, are not entirely satisfactory. All present facing fabrics are weft stretch. They are produced by bulking (i.e. to make it stretch easily) nylon or polyester fibre and then weaving the bulked fibre in the weft whilst the warp is rigid nylon or polyester fibre. The resulting fabric is treated to ensure retention of its bulk and stretch. The fabric is then further treated with rubber such as neoprene before being incorporated into a mould for producing the timing belt so that teeth or surface raised portions are imparted to the facing fabric by virtue of the internal shape of the mould. This method relies on the fabric being in a "stretching" condition before being applied to the mould. This inherent stretch property is necessary if the fabric is to form teeth correctly. Furthermore, extremely close control of the production of the facing fabric, and ultimately the belt, is necessary.

Variations in the weft threads are introduced in bulking heads due to head variations and cannot be removed even by weft mixing on the loom. In treating the fabric to ensure that it retains its bulk and stretch, for example by scouring and stentering, variations in the temperature of the water used in this process makes the fabric difficult to control.

The following further difficulties also arise in the use of known facing fabric particularly in its incorporation into timing belts.

Firstly, only short lengths of fabric can be used for covering the teeth or raised portions of the belt, because the known fabric is weft stretch only. Commercially, weft stretch fabric is available in sizes up to 2 metres wide, its width being limited by the maximum possible width of the loom on which it can be produced and its high bulking shrinkage during finishing. This problem might be solved by making the fabric warp stretch instead of weft stretch, the only limiting factor to this being the length of the roll of fabric which can be produced. The aforementioned solution would not be entirely satisfactory because of the preparatory process of rubber coating the fabric before its incorporation into timing belts. This process would involve applying tension to the fabric in the warp direction which would open up interstices of the fabric thus allowing the 'molten' rubber to penetrate the resulting holes. The rubber would 'block' the holes and prevent the fabric from returning to its stretchy condition which is necessary in the moulding of the belt.

Secondly, there is almost total reliance on the weft threads in the provision of good belt performance, the warp threads playing only a supportive role during processing of the fabric to enable the fabric to be placed in the mould as a fabric. The warp threads play virtually no part in belt performance. Only the weft threads help support the tooth. The main failure of timing belts is the rupturing of the fabric at the bottom of the tooth across the weft, no protection against this being offered by the warp threads.

Thirdly, there is the problem of excessive noise generation with known belts due to the fact that bulked fibres or threads return (virtually) to their original state when stretched over the teeth so that fabric returns to being a fairly rigid structure both in weft and warp without providing any cushioning either in its weft or its warp directions.

both in weft and warp without providing any cushioning either in its weft or its warp directions.

Fourthly, with the innovation of different tooth shapes a fabric with different amount of stretch is required. At present this can only be achieved by producing fabric with different weaving constructions.

An object of the invention is to overcome the aforesaid difficulties inherent in producing facing fabric and incorporating said fabric into timing belts.

With this object in view the present invention provides a facing fabric, more particularly but not exclusively for timing belts, comprising weft threads which are rigid, or spun or bulked, and warp threads, characterised in that the warp threads are of partially orientated yarn.

Advantageously, the weft threads are standard continuous filament yarn.

Preferably, the weft threads and the warp threads are of thermoplastics such as nylon or polyester.

The present invention also provides for a method of making the facing fabric as aforesaid and of incorporating said facing fabric into timing belts, characterised in that warp threads of partially orientated yarn are rigidly held and weft threads of rigid, or spun or bulked yarn are woven therewith, the resulting fabric being treated with rubber or a rubber compound and subsequently placed in a mould for timing belts.

In addition the present invention provides a timing belt comprising a rubber coated facing fabric comprised of rigid, or spun, or bulked weft threads interwoven with warp threads, characterised in that the weft threads extend widthwise of the belt and the warp threads extend lengthwise of the belt, are of partially orientated yarn so that the belt is lengthwise stretchable during moulding, and are embedded in the weft threads so that the weft threads serve as the wearing surface of the belt.

The invention will be described further, by way of example, with reference to the accompanying drawings in which:

Fig. 1 is a highly detailed view of the structure of known facing fabric;

Fig. 2 is a sectional elevation of part of a timing belt faced with the fabric of Fig. 1

Fig. 3 is a view similar to Fig. 1 but illustrating the structure of a preferred fabric of the invention;

Fig. 4 is a view similar to Fig. 2 but with the belt faced with the fabric of Fig. 3; and

Figs. 5 and 6 illustrated in section parts of two different types of timing belts.

Referring firstly to Fig. 1, illustrated therein is known facing fabric 10 comprising weft threads 11, of bulked nylon or polyester, which are woven with warp threads 12 of rigid nylon or polyester.

The woven fabric 10 is treated or finished to ensure retention of its bulk and stretch. Prior to being placed in a mould for the building of the timing belt, the fabric 10 is coated with rubber such as neoprene. During coating the fabric 10 is put under tension in its warp direction.

The mould (not shown) is commonly drum like having grooves or recesses formed in its interior surfaces corresponding to the desired shape and location of the teeth of the timing belt. The fabric 10 is placed in the mould first and the belt is built layer upon layer upon the fabric 10 somewhat like the tyre of a motor vehicle. When built the belt is cured in, for example, a curing pot (not shown).

Fig. 2 illustrates part of a typical belt 13 which has been moulded with the facing fabric 10. It will be clearly seen that the fabric 10 has a fairly rigid structure. This is due to the fact that rigid warp threads 12 are used in the weaving of the fabric 10 and after tensioning the fabric 10 in the direction of the warp to apply the coating of rubber, the rubber fills the interstices opened up by the tensioning of the warp preventing the fabric returning to its original stretchy condition when warp tension is released.

Due to the fact that the fabric 10 is stretched to virtually its full extent prior to its insertion into the mould, further stretching of the fabric 10 which is inherent in the moulding process is difficult to achieve. This can result in timing belts of a poor quality.

Furthermore, as the fabric 10 is moulded as indicated in Fig. 1 in its weft direction (because there is more stretch in its weft than in its warp) only short lengths of fabric 10 can be used. This is because there is a limit to the width of the loom which can be used for weaving the fabric. Therefore, depending on its length the timing belt could be faced with several lengths of fabric which would again impair its quality and reliability.

Due to the fact that the fabric 10 is in a highly stretched condition over the teeth of the timing belt 13, such a timing belt 13 tends to generate excessive noise and wears quickly, particularly in its weft direction.

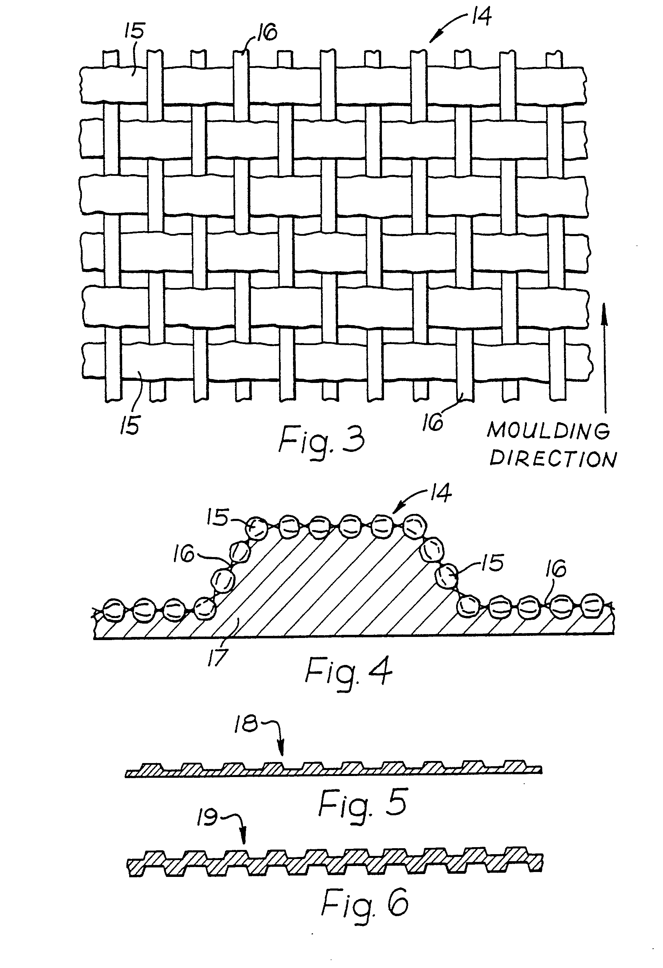

Referring now to Fig. 3, the preferred facing fabric 14 of the invention comprises bulked weft threads 15, of standard continuous filament yarn and of thermoplastics material such as nylon or polyester, which are woven with warp threads 16 of partially orientated yarn, for example a thermoplastics such as nylon or polyester.

In incorporating the fabric 14 of the invention into timing belts, as with the known fabric 10 of Fig. 1 the fabric 14 is the first of all treated or coated with rubber such as neoprene and then applied to a drum-like mould for the timing belt. The timing belt 17 so produced is illustrated in Fig. 4.

The fabric 14 of the invention has a number of advantages over the known fabric 10.

Firstly, because the warp threads 16 of the fabric 14 run in the moulding direction of the fabric 14 (as indicated in Fig. 3) the length of fabric 14 which can be used is not limited by the widths of the loom used in weaving the fabric 14. Therefore a belt of any desired length can be produced without the need to have a belt which is made up of several lengths of fabric spliced together.

The weaving of the fabric 14 is conventional although using warp of partially orientated yarn and bulked weft. The partially orientated yarn goes around the periphery of the belt and is moulded by being heat sensitive at the belt's curing temperature.

After weaving and prior to moulding the fabric can be finished using two different temperatures. The first temperature is sufficient to bulk the weft threads 15 and the second temperature which is higher than the first shrinks the warp threads 16, although this is only necessary in the production of high profiled belts.

The bulked weft acts as the wearing surface of the belt 17 because as shown in Fig. 4 it becomes soft and fluffy whilst the warp embeds itself in the weft. The weft therefore protects the warp from excessive wear. The bulked weft provides a cushioning effect which reduces noise generation.

Figs. 5 and 6 illustrate more generally the type of timing belts with which the present invention is concerned. Timing belt 18 of Fig. 5 is similar to the belts of Figs. 1 and 3 in that it has square cross-section teeth on one side only. As Fig. 6 illustrates, a timing belt 19 with teeth on both sides can readily be faced with the fabric of the invention.

## Claims

1. A facing fabric 14, more particularly but not exclusively for timing belts (17), comprising weft threads (15), which are rigid, or spun or bulked and warp threads (16), characterised in that the warp threads (16) are of partially orientated yarn.

2. A fabric as claimed in claim 1 wherein the weft threads (15) are standard continuous filament yarn.

3. A fabric as claimed in claim 1 wherein the weft threads (15) and the warp threads (16) are of thermoplastics such as nylon or polyester.

4. A method of making the facing fabric (14) of any one of claims 1 to 3 and of incorporating said facing fabric (14) into timing belts (17), characterised in that warp threads (16) of partially orientated yarn are rigidly held and weft threads (15) of rigid, or spun or bulked yarn are woven therewith, the resulting fabric (14) being treated with rubber or a rubber compound and subsequently placed in a mould for timing belts.

5. A timing belt comprising a rubber coated facing fabric (14) comprised of rigid, or spun, or bulked weft threads (15) interwoven with warp threads (16), characterised in that the weft threads (15) extend widthwise of the belt (17) and in that the warp threads (16) extend lengthwise of the belt (17), are of partially orientated yarn so that the belt (17) is lengthwise stretchable during moulding, and are embedded in the weft threads (15) so that the weft threads (15) serve as the wearing surface of the belt (17).

## Patentansprüche

1. Beschichtungsgewebe (14), insbesondere, jedoch nicht ausschließlich für Zahnriemen (17), umfassend starre, gesponnene oder gebauschte Schußfäden (15) und Kettfäden (16), dadurch gekennzeichnet, daß die Kettfäden (16) aus teilweise orientiertem Garn bestehen.

2. Gewebe nach Anspruch 1, dadurch gekennzeichnet, daß die Schußfäden (15) aus normalem Endlosfasergarn bestehen.

3. Gewebe nach Anspruch 1, dadurch gekennzeichnet, daß die Schußfäden (15) und die Kettfäden (16) aus Thermoplasten, wie Nylon oder Polyester, bestehen.

4. Verfahren zur Herstellung des Beschichtungsgewebes (14) nach einem der Ansprüche 1 bis 3 und zur Aufbringung des Beschichtungsgewebes (14) auf Zahnriemen (17), dadurch gekennzeichnet, daß Kettfäden (16) aus teilweise orientiertem Garn starr gehalten sind und Schußfäden (15) aus starrem oder gesponnenem oder gebauschtem Garn damit verwoben sind, wobei das sich ergebende Gewebe (14) mit Gummi oder einer Gummiverbindung behandelt und danach in eine Form für Zahnriemen eingebracht wird.

5. Zahnriemen, umfassend ein gummi-ummanteltes Beschichtungsgewebe (14), bestehend aus starren oder gesponnenen oder gebauschten Schußfäden (15), die mit Kettfäden (16) verwoben sind, dadurch gekennzeichnet, daß die Schußfäden (15) sich in Breitenrichtung des Riemens (17) erstrecken und die Kettfäden (16) sich in Längsrichtung des Riemens (17) erstrecken, aus teilweise gerichtetem Garn bestehen, so daß der Riemen (17) während des Formpressens in Längsrichtung dehnbar ist, und in die Schußfäden (15) eingebettet sind, so daß die Schußfäden (15) als Verschleißschicht des Riemens (17) dienen.

## Revendications

1. Un tissu de revêtement (14), plus particulièrement mais non exclusivement pour des courroies de rythme (17), comportant des fils de trame (15), qui sont rigides, filés ou texturisés, et des fils de chaîne (16), caractérisé en ce que les fils de chaîne (16) sont en fil partiellement orienté.

2. Un tissu selon la revendication 1, dans lequel les fils de trame (15) sont des fils à filaments continus standards.

3. Un tissu selon la revendication 1, dans lequel les fils de trame (15) et les fils de chaîne (16) sont en matière thermoplastique, telle que du nylon ou du polyester.

4. Un procédé de fabrication du tissu de revêtement (14) de l'une quelconque des revendications 1 à 3 et d'incorporation dudit tissu de revêtement aux courroies de rythme (17), caractérisé en ce que les fils de chaîne (16) en fil partiellement orienté sont maintenus rigidement et les fils de trame (15) en fil rigide, filé ou texturisé sont tissés avec ceux-ci, le tissu résultant (14) étant traité avec du caoutchouc ou un composé de caoutchouc, puis placé dans un moule pour courroies de rythme.

5. Une courroie de rythme comportant un tissu de revêtement (14) recouvert de caoutchouc et constitué de fils de trame (15) rigides, filés ou texturisés, tissés avec des fils de chaîne (16), caractérisée en ce que les fils de trame (15) s'étendent transversalement à la courroie (17) et en ce que les fils de chaîne (16) s'étendent longitudinalement à la courroie (17), sont en fil partiellement orienté de manière que la courroie (17) puisse être allongée longitudinalement pendant le moulage, et sont encastrés dans les fils de trame (15) de manière que les fils de trame (15) servent de surface d'usure de la courroie (17).

*Fig. 1*

MOULDING DIRECTION

*Fig. 2*

15    16    14

*Fig. 3*

15    16    MOULDING DIRECTION

14
15
16
15
16
17

*Fig. 4*

18

*Fig. 5*

19

*Fig. 6*

2